# EUROPEAN PATENT APPLICATION

(11) **EP 1 686 439 A1**
(43) Date of publication of application: **02.08.2006**
(21) Application number: 06380029.6
(22) Date of filing: 31.01.2006
(51) Int. Cl.: G05B 19/042, F24F 11/00, F24F 3/16, B01D 53/86

(54) **Autonomous air quality controller device using a multifunctional chemisorbent-photocatalytic material**

(30) Priority: 01.02.2005 ES 200500178 U
(71) Applicant: AMBITO DE INVESTIGACION TECNOLOGICA, S.L., 05001 Avila (ES)
(72) Inventor: Martín Velayos, José Luis, 05001 Avila (ES); Del Pozo García, Francisco Javier, 05001 Avila (ES)
(74) Representative: Gil-Vega, Victor

(57) **Abstract**

Autonomous system designed for the detection, diagnosis, information, capture, transport, transformation and inactivation of environmental microbiological contaminants, allergens and foul odours present in interior environments that may cause discomfort to the occupants thereof, which consists of passing the air through an autonomous, intelligent device composed of a central processing unit (CPU) related to a sensor module (SM), a user interface module (UIM), another communication interface module (CIM), a data storage module (DSM) and a chemisorbent - photocatalytic reactor (CPR), which detects and analyses the contaminated environment and regenerates it by means of a multifunctional material that is a mixture of one or several semiconductors, impregnated with one or several highly oxidant substances, with the material being photoactivated by means of LED-generated photons, and maintaining the system at a minimum relative humidity of 30 % so that the chemisorption and photocatalysis reactions may take place.

## Description

### OBJECT OF THE INVENTION

This invention refers to an autonomous, intelligent system used for the detection, diagnosis, information, capture, transport, transformation and inactivation of those contaminants present in contaminated interior environments, based on the use of a multifunctional chemisorbent - photocatalytic material.

The object of the invention is, therefore, to provide a new device designed for the simple, effective control and treatment of air in contaminated environments, that is capable of removing said environmental, microbiological and allergenic contaminants and foul odours which cause or may cause discomfort to the occupants of those environments.

This invention has applications within the industry devoted to the manufacturing of machines, devices and auxiliary elements designed for the control of interior environments in buildings, surface waters, underground waters, tanks, the petrochemical industry, cosmetics, confectionery, electronics, photography, hospitals, schools, child-care centres, the pharmaceutical, automotive, aeronautic and aerospace industries, the textile industry, farms, restaurants, bottling companies, hypermarkets, etc.

### BACKGROUND OF THE INVENTION

Air quality in interior environments may be defined as the nature of air inasmuch as it affects the health and welfare of the occupants of a building or home. The amount of time spent inside these facilities is a reason for concern, given the fact that pollution levels in interiors may be 10 to 100 times higher than external concentrations. The symptoms exhibited by those affected are usually not severe and, since they do not cause an excessive number of sick leaves, oftentimes the effects tend to be minimised; however, these effects translate into a general state of discomfort. In practise, these effects can alter workers' physical as well as mental health, causing greater stress and, consequently, lower work performance. In order to describe these situations, when the symptoms affect over 20 % of a building's occupants, the expression "sick building syndrome" is used.

Currently, it is accepted that those environments which do not have natural ventilation and which are closed, in order to obtain a higher air conditioning system performance, may be exposed to contaminants. These environments include offices, public buildings, schools and child-care centres, commercial buildings, and even private residences. The magnitude of the health damages which they may cause is not accurately known, since the levels of contaminants that have been determined, mainly in studies conducted at offices and private residences, tend to be well below the respective permissible exposure levels for industrial environments.

On the other hand, traditional industrial hygiene techniques are oftentimes insufficient and inadequate for finding solutions, since the primary causes of this situation are often difficult to identify.

Air quality in a building interior is dependent on a series of parameters which include the exterior air quality, the compartmentation, the air-conditioning system design and the conditions under which this system operates.

Evidently, the air in the interior of a building should not contain contaminants at concentrations higher than those which may have harmful health effects or cause discomfort to its occupants. These contaminants include those that may be present in the exterior air, which enters the building, and those caused by activities inside the building, the furniture, construction materials, surface coatings and air treatments. The most frequent risk situations for the occupants are exposure to toxic, radioactive and irritant substances, the induction of infections or allergies, uncomfortable thermal-hygrometric conditions and unpleasant odours.

In general, those contaminants present in ambient air enter the body by inhalation and, therefore, initially affect the respiratory tract, but they may also be absorbed and affect other organs or accumulate in different tissues. Furthermore, there may be contaminants which cause eye irritation or generate skin problems such as rashes and itching. The effects on the respiratory tract are, primarily, nose, throat and bronchial irritation, with the potential to cause changes in bronchial reactivity, or the allergen-induced mediator release which leads to the appearance of rhinitis, asthma or hypersensitive pneumonitis. On the other hand, microbial contaminants may cause infectious diseases.

The symptoms related to deficient air quality inside a building are: headache, dizziness, nausea, fatigue, dry skin, eye irritation, sinus congestion and coughing. One must not forget that poor-quality air causes discomfort, and may trigger complex psychological reactions, mood swings, changes in the state of mind and difficulty in interpersonal relations.

The occupants of a building are by themselves a source of contamination, since human beings naturally produce carbon dioxide, water vapour and biological particles and aerosols. On the other hand, there is an important set of contaminants which may be generated by the building itself, its contents or which may even be dependent on its location. Another group is caused by those combustions which take place in the interior. The use of cleaning, maintenance and embellishment products may also lead to the presence of contaminants in the interior of a building.

Some of these sources produce complex mixtures, such as tobacco smoke, aerosols and the smoke generated in food preparation, infectious biological aerosols and allergens generated in refrigeration circuits and those specific to the human body.

Infectious diseases are more easily transmitted in closed environments than in the exterior, since the volume of air in which the microorganisms are diluted is lower, direct contact is greater and people spend more time in closed environments than outdoors. One must also bear in mind that many contagious diseases require direct contact between human hosts for transmission, whilst others, such as the flu, measles, smallpox, tuberculosis and some common colds, are easily transmitted by air, and the microorganisms that cause them are able to survive during their passage through the ventilation system if specific measures are not taken in this regard.

Other contagious diseases are directly transmitted from reservoirs to the environment. These include legionellosis and other bacterial pneumonias and most of the diseases caused by fungi. Legionella, for example, survives and multiplies in refrigeration towers, humidifiers, showerheads, in waste and water in general, which act as reservoirs and multipliers for the microorganisms. Dissemination takes place when a reservoir is altered or when the contaminated machine is, in addition, a multiplier and disseminator, e.g. a refrigeration tower or a humidifier.

On the other hand, pathogenic fungi contaminate the soil. When the latter is altered by the wind or by excavations, the fungi may enter the interior environment. The presence of bird nests in buildings is also a source of fungus contamination.

In general, those infectious diseases transmitted by air may affect the respiratory system, at least initially, and the symptoms manifest themselves both in the upper and lower tracts. Infectious agents may cause disease to any of the exposed persons, although those who have health problems and/or a compromised immune system, especially children and the elderly, are a higher-risk group.

There is no knowledge of the existence of a device that is capable of evaluating, correcting and/or notifying of the steps to be followed in order to improve the quality of an environment, and thus make it possible to prevent and correct environments that are hazardous to the health of those occupying a given enclosed area.

Photocatalysis is a process based on the direct or indirect absorption of radiant energy, visible or UV, by a semiconductor which is placed directly or indirectly on the surface of a substrate or by insertion of a bonding layer, and which is subject to a high- or low-temperature heat treatment. The reactions which destroy or remove the contaminants take place in the interface region between the excited solid and the solution, without the catalyst undergoing any chemical changes.

There are various materials which have suitable properties to act as catalysts and perform photosensitised reactions, such as, for example, TiO₂, ZnO, CdS, iron oxides, WO₃, ZnS, etc. These materials are economically affordable, and many of them even participate in chemical processes in nature. Furthermore, most of these materials can be excited with relatively low-energy light, absorbing part of the solar spectrum radiation that hits the earth surface (λ > 310 nm), which increases their potential for the exploitation of sunlight. The most widely-used semiconductors exhibit valence bands with oxidation potential (+1 to + 3.5 V) and conduction bands with moderate reduction potential (+0.5 to -1.5 V). Therefore, in the presence of redox species absorbed in the semiconductor particle and under illumination, oxidation and reduction reactions simultaneously take place on the semiconductor surface. One of the most critical aspects is the high probability of electron-hole recombination, which competes with the separation of photogenerated charges.

### DESCRIPTION OF THE INVENTION

The autonomous air quality controller device using a multifunctional chemisorbent - photocatalytic material that is proposed by the invention resolves in a fully satisfactory manner the problems described above, regarding the different aspects discussed, since it is a system which allows for the detection, diagnosis, information, capture, transport, transformation and inactivation of those contaminants present in contaminated interior environments.

More specifically, the system proposed by this invention consists of passing the air from an area characterised by its own load of environmental, microbiological and allergenic contaminants and foul odours that cause or may cause discomfort to their occupants through the autonomous device, which contains a multifunctional material that is a mixture of one or several semiconductors without the need for a header; impregnated with one or several highly oxidant substances, said surface is formed and remains in the system at a given relative humidity and, photoactivated by means of LED-generated photons of a certain wavelength, whereon the characteristic contaminants are deposited and their photo-oxidation to CO₂ is achieved in air by total oxidation of the organic matter making up these cells and the rest of the environmental contaminants.

The autonomous system designed for the detection, diagnosis, information, capture, transport, transformation and inactivation of those contaminants present in contaminated interior environments is characterised in that it is composed a central processing unit (CPU), with the capability to process and control the different modules that collaborate with it and whereto it is directly related. Therefore, a sensor module, a user interface module, another communication interface module, a data storage module and a chemisorbent - photocatalytic reactor participate in the system.

The sensor module (SM) is composed of the different sensors that make it possible to obtain values for the environmental constants of the place being analysed. Thus, physical constants, such as light, sound, relative humidity, temperature, atmospheric pressure, air velocity, etc., chemical constants, such as VOCs, ETS (in relation to tobacco smoke), CO, CO₂, NOx, SO₂, ozone and general air contaminants, and biological constants will be measured.

The user interface module (UIM) is in charge of implementing the different types of interface with the user of the device. Said module may be supplemented with a display (D) and/or LEDs in order to visually inform the user. In addition, it may have an audio reproducer (AR) with an incorporated loudspeaker or with a headphone connector, in order to audibly inform the user. It may also incorporate a keyboard (K) and a microphone (M) in order to manually and audibly interact with the device.

The communication interface module (CIM) implements the different forms of data communication with the exterior. The connection may be made via cable, wireless, wi-fi, etc.

The data storage module (DSM) is in charge of storing the information that is progressively obtained about the environment under study, as well as the corrective or guiding actions which the device has executed. The stored information may be downloaded to different external devices through the communication module.

Finally, the system has a chemisorbent - photocatalytic reactor (CPR), which is in charge of actually performing the actions on the contaminated environment under study and control.

In this way, the autonomous system designed for the detection, diagnosis, information, capture, transport, transformation and inactivation of those contaminants present in contaminated interior environments, as has been previously discussed, detects and analyses the contaminated environment and regenerates it by means of a multifunctional material that is a mixture of one or several semiconductors without the need for a header, impregnated with one or several highly oxidant substances, such that the material is photoactivated by LED-generated photons of a certain wavelength, and maintained in the system at a given relative humidity so that the chemisorption and photocatalysis reactions may take place.

The catalyst semiconductors used are, amongst others, TiO₂, SrTiO₃, WO₃, Bi₂O₃, ZnO, SNO₂, CdS, SiC, MoS₃, MgO, SiO₂, Fe₂O₃, ZnS, and the impregnations are performed with KMnO₄ or NalO₄. Photoactivation is conducted by means of LED-generated photons which primarily emit in the ultraviolet range, between 200 and 400 nm, and this is where most of the germicidal effect takes place; specifically, the optimal germicidal action of UV light takes place at 265 nm. The genetic material or DNA is a target for UV light; since this light penetrates through the cell wall and the cytoplasmic membrane, it causes molecular restructuring of the microorganism's DNA, which prevents it from reproducing, and if a cell cannot reproduce it is considered to be dead, although the sole action of UV-C light by itself is less effective than the combination thereof with the surface.

As a consequence of this photoactivation, electron transfer processes take place on the semiconductor surface, such that the valence electrons may be excited to the conduction band, creating highly reactive electron - hole pairs. The excess electrons in the conduction band react with molecular oxigen to form superoxide ions that may form hydroxyl radicals, such that the surface of the holes reacts with the adsorbed water or with the OH- groups to also form hydroxyl radicals; in this way, the photoactivated surface is capable of promoting catalytically photoassisted reactions. Only the simultaneous use of light and an oxidant on a semiconductor, acting as a reaction catalyst, has fully achieved the mineralisation of organic carbon to carbon dioxide by the total oxidation of the organic matter making up these cells and the VOCs.

To this end, mixtures containing between 20 % and 75 % of a catalyst semiconductor by weight and between 15 % and 60 % of an oxidant are prepared; the consistency and plasticity of the paste are adjusted by controlling the amount of water incorporated, in such a way that the final product obtained has a humidity % between 30 % and 40 %. The semiconductor - oxidant mixture or mixtures are deposited in a tank or casing endowed with a central grid.

The autonomous system designed for the detection, diagnosis, information, capture, transport, transformation and inactivation of those contaminants present in contaminated interior environments must control and inform about the relative humidty present in the chemisorbent - photocatalytic reactor, since those systems or environments with humidities below 30 % block photocatalysis.

The ultraviolet LEDs may differ in number, geometry, power, lifetime and types, all in relation to the reactor volume.

### DESCRIPTION OF THE DRAWINGS

In order to complement the description being made and contribute to a better understanding of the characteristics of the invention, in accordance with a preferred embodiment example thereof, a set of drawings accompanies said description, as an integral part thereof, wherein the following has been represented, for illustration purposes and not limited thereto:
Figure 1.- Shows a block diagram which represents the different modules and elements that make up the autonomous system designed for the detection, diagnosis, information, capture, transport, transformation and inactivation of those contaminants present in contaminated interior environments proposed by the invention.
Figure 2.- Shows a graph which represents the aerosolisation efficiency for a trial conducted on a sample containing the system proposed by the invention and another sample that does not contain it.
Figure 3.- Shows a graph which represents the validation of headers, in order to verify the retention of microorganisms for a sample of filter paper and another sample of plasticised fabric.
Figure 4.- Shows another graph which represents the results obtained for the different trials conducted with Pseudomonas Aeruginosa.
Figure 5.- Shows the same graph, but for trials conducted with Micrococcus Luteus.
Figure 6.- Shows, once again, a graph which represents the results obtained for the trials conducted with Aspergillus Niger.
Figure 7.- Shows, finally, a graph similar to the previous ones, but performed for the results obtained from applying the system proposed by the invention in a real environment.

### EMBODIMENT EXAMPLES OF THE INVENTION

The examples described below illustrate the preferred embodiments of this invention and do not at all intend to limit the scope of protection thereof.

According to an experimental design, it is possible to bring together the surface, the ultraviolet LEDs and an aerosol of microorganisms, which, in turn, makes it possible to estimate the reduction in the number of microorganisms caused by the components.

For said trials, a mixture of semiconductors and oxidant has been prepared containing 70 % TiO₂ and SiO₂ as catalyst semiconductors, 15% KMnO₄ used as an oxidant, and 15 % water. This mixture is maintained for a 30-minute period, such that a mixture with a relative humidity of 35 % is obtained.

In order to create the aerosol of microorganisms, the choice was made to bubble air in a suspension thereof contained in a Kitasato flask. The air is previously sterilised by passing it through a filter. The microorganisms are re-suspended in 400 ml of peptone water, which is a culture medium that is used to maintain their viability. The medium contains 0.01 % of a detergent (TWEEN 80) in order to reduce the surface tension and allow for the formation of microdrops carrying the microorganisms when the bubbles burst.

Once suspended, the cells are transported by the air current towards the Kitasato flask outlet and driven to the trial system. The latter is composed of two bell jars which have an outlet at the top and are joined face-to-face at the base. A UV LED panel is placed on the upper bell jar, whilst the mixture of semiconductors and oxidant is placed on the lower one; and both bell jars are united by a rubber joint, the edge being sealed with parafilm, and kept hermetically closed by means of a metal locking device.

The mixture of semiconductors and oxidant is placed in a cylinder of a given volume, the base whereof is coated with a material that allows for the passage of air.

The lower part of the bell jars communicate, through a tube and a pipette, with another Kitasato flask, which also contains peptone water, a 100-ml volume, but without detergent, and which collects the microorganisms when the air carrying them bubbles. A filter is placed at the Kitasato flask outlet in order to prevent leaks.

The trials have been conducted with a 3-l/min air flow, for one hour, with starting inocula of about 10¹⁰ CFU · ml. The microorganism counts at the collection flask have been conducted using the most probable number technique and by plate count.

In order to check the trial method, one must verify that the system is effective in terms of aerosolisation and the passage of microorganisms. In the first place, it should not exert retention by itself and, in the second place, it should be effective in achieving the passage of a sufficient number of microorganisms to detect a significant reduction when the complete system, that is, the mixture of semiconductors and oxidants and UV light, operates.

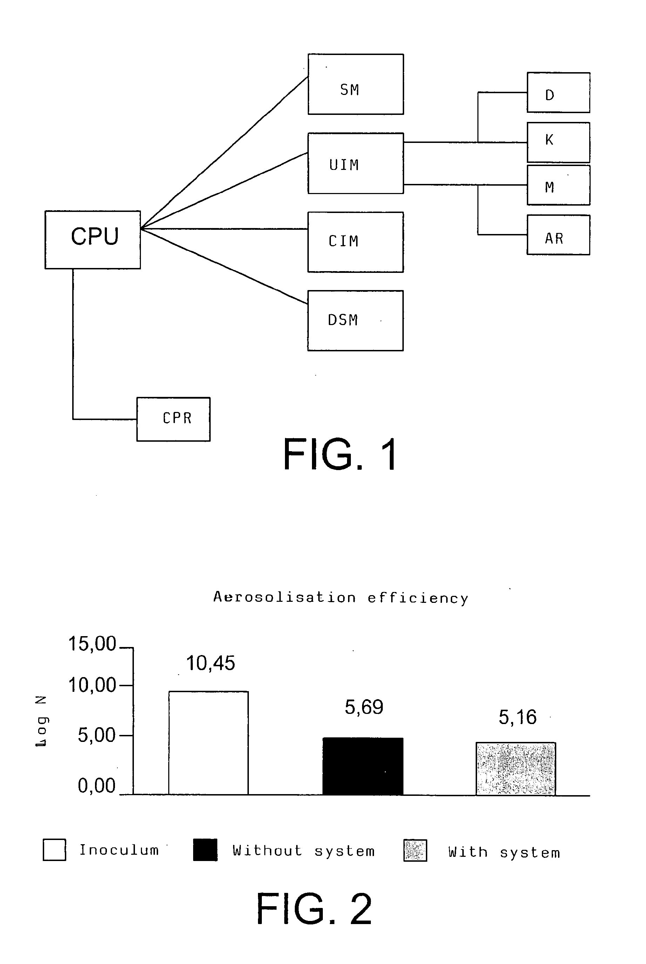

In order to verify the system's feasibility, two trials were conducted, one with the flask containing the inoculum directly connected to the collection flask, and another which also has the trial system incorporated. The results obtained are shown in figure 2; they indicate that the trial system does not exert significant retention and that the number of microorganisms collected is sufficient to detect potential reductions.

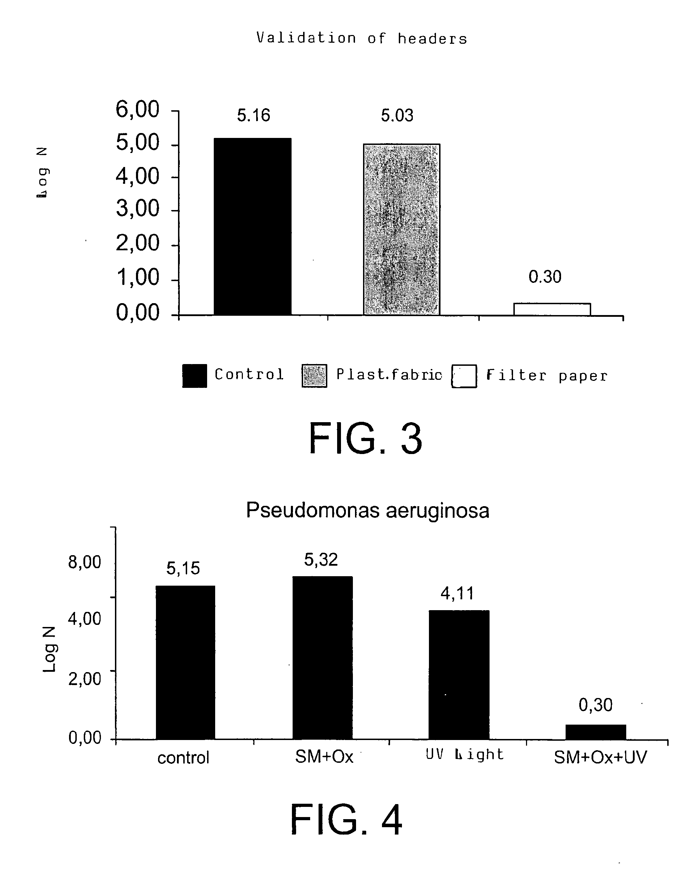

On the other hand, it is also necessary to verify that the header designed to contain the impregnated 30/60 granulated surface does not retain the microorganisms and allows for the free passage thereof. To this end, trials are conducted with two types of headers, filter paper and a plasticised fabric, the latter being the one originally proposed. It was verified that filter paper produces almost total retention of the microorganisms, whereas the plasticised fabric allows for the passage thereof, without significantly reducing the number of said microorganisms; these results are shown in figure 3.

The trial itself is conducted in a flow bell jar in order to prevent, to the extent possible, contaminations that may lead to erroneous results. In this controlled environment, one ensures that the results obtained refer only to the microorganism being used and not to another one.

In order to conduct the study, in the first place strains of different groups of microorganisms are used, pertaining to the Spanish Collection of Type Cultures (CECT), and, more specifically:
- Bacteria
   Micrococcus luteus CECT 51
   Pseudomonas aeruginosa CECT 108
- Filamentous fungi and yeasts
   Aspergillus niger CECT 2088

Once the system's capacity to conduct reliable trials has been verified, the studies begin for four different situations, in the following order:
- with mixture of semiconductors + oxidant and UV light,
- with mixture of semiconductors + oxidant and UV light off,
- without mixture of semiconductors + oxidant and UV light on,
- control without mixture of semiconductors + oxidant, without UV light.

The trials are conducted on the same inoculum flask and the collection flask is changed. In the case of the trial that uses the mixture of semiconductors + oxidant and UV light, the lamp is kept on for five minutes prior to the beginning of bubbling, in order to allow sufficient time for the potential toxic oxygen radicals to be generated in the system and exert their action on the microorganisms.

In the first place, the trial is conducted with Pseudomonas aeruginosa, which is a gram-negative, strictly aerobic bacteria. It is considered to be an opportunistic pathogen typical of nosocomial infections, with the capability to infect different body regions under adequate conditions. It may produce skin infections and lesions, and is an important pathogen for patients suffering from cystic fibrosis, capable of causing pneumonia. It is resistant to numerous antibiotics, and may be isolated in numerous environments, particularly in humid areas.

The tests conducted with the microorganism indicate, in the first place, that the mixture of semiconductors + oxidant does not exert a filtering effect against passage of said microorganisms, since the count values are similar to the control values, as shown in figure 4. Due to its germicidal power, UV light does cause a reduction in the count value. However, the most significant datum is the large decrease in the number of viable microorganisms in the case of combined action by the mixture of semiconductors + oxidant and UV light, with an almost total reduction being obtained, by comparison with the control.

Another of the trials was conducted with Micrococcus luteus, which forms a part of the skin and the upper respiratory tract normal microbiota. It is frequently detected in air samples.

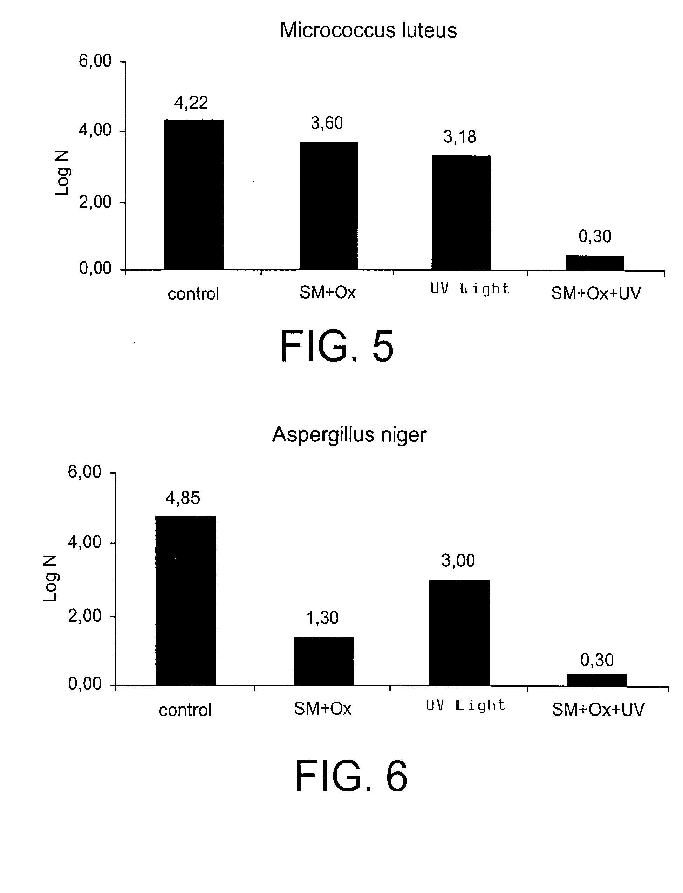

As was the case with the previous microorganism, in this case no effect on the number of microorganisms is detected when the mixture of semiconductors + oxidant is used, as shown in figure 5; a reduction thereof is observed due to the germicidal effect of UV light, and the reduction is much more marked as a result of combined action by the mixture and UV light.

The following trial was conducted with Aspergillus niger, which is a black filamentous fungus that spontaneously grows on the soil, humid walls or organic waste. It is easily transported through spores by the movement of air, and it may cause ocular micosis. This fungus is resistant to numerous antibiotics.

The tests conducted with this fungus indicate that the mixture of semiconductors + oxidant exerts a filtering effect against the passage of the microorganisms, since lower count values are obtained as compared to the control values, as may be seen in figure 6. Due to its germicidal power, UV light does cause a reduction in the count value, but it is less marked than when the mixture of semiconductors + oxidant is used. However, the most significant datum is the large decrease in the number of viable microorganisms in the case of combined action by the mixture of semiconductors + oxidant and UV light, with an almost total reduction being obtained, by comparison with the control.

Finally, the trial is conducted in a real environment; for this, the system used is the same as in the previous cases, but with some differences; thus, a funnel is incorporated at the upper part of the bell jar, in order to increase the capture surface for the microorganisms in the environment; in addition, a vacuum pump is used in order to force the entry of air from the environment into the system.

In conducting this trial, we do not start from a given microorganism inoculum, but from a heterogeneous set of aerobic mesophyllic microorganisms that are dispersed in air in any environment. The microorganisms usually found are bacteria, for example, Bacillus, fungi such as Aspergillus, viruses such as Influenza or the flu virus, or protozoa such as Naegleria, which are normally not harmful to human health.

During the trial, and always maintaining the same order, different tests are conducted; in the first place, a control of the entire system is performed without UV light; in the second place, without the mixture of semiconductors + oxidant and with UV light; and, finally, a third test, in which the mixture of semiconductors + oxidant is combined with UV light. The count methods used in the trials are: the most probable number method, in order to obtain the total colony forming units in liquid medium; plate count, in order to obtain the mesophyllic aerobic microorganisms, and selective media designed to detect the different microorganisms which can be found in the real environment and which might resist the joint effect of the mixture of semiconductors + oxidant and UV light, such as, for example, Cetrimide for Pseudomonas, KAAA for enterococci, salt manitol for staphylococci, and sabouraud for fungi and yeasts.

In addition to all these methods, a filtering trial is conducted which consists of filtering the medium contained in the Kitasato collection flask, collecting the filter whereon the microorganisms present in the medium have been retained and later carrying it to the different media that are to be tested. In this case, the trial was conducted in sabouraud, in order to observe the growth of fungi.

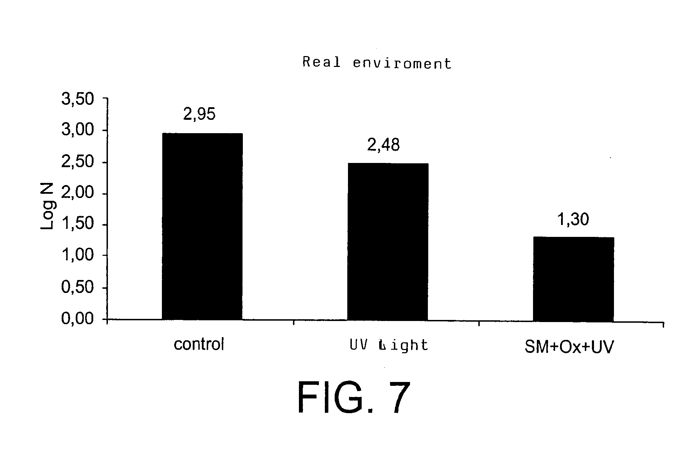

The results for this trial are shown in figure 7, where we observe a reduction due to the microbicidal power of UV light, but said reduction is much greater with the combination of the mixture of semiconductors + oxidant.

## Claims

1. ^{a}.- Autonomous air quality controller device using a multifunctional chemisorbent-photocatalytic material, applicable for the detection, diagnosis, information, capture, transport, transformation and inactivation of those contaminants present in contaminated interior environments, **characterised in that** it is composed of a central processing unit (CPU) that has the capability to process and control the different modules that collaborate with it and whereto it is directly related, which are materialised in a sensor module (SM) containing physical, chemical and biological sensors, a user interface module (UIM), another communication interface module (CIM), a data storage module (DSM) and a chemisorbent - photocatalytic reactor (CPR).

2. ^{a}.- Autonomous air quality controller device using a multifunctional chemisorbent-photocatalytic material, as claimed in claim 1, **characterised in that** the user interface module has a display and/or LEDs (D), as well as an audio reproducer (AR), which may be assisted, respectively, by a keyboard (K) and a microphone (M).

3. ^{a}.- Autonomous air quality controller device using a multifunctional chemisorbent-photocatalytic material, as claimed in the preceding claims, **characterised in that** it allows for the passage of air from an interior area carrying a load of environmental, biological and allergenic contaminants and foul odours which may cause discomfort, detecting and analysing the contaminated environment, in order to regenerate it by means of a multifunctional material that is a mixture of one or several semiconductors without the need for a header; impregnated with one or several highly oxidant substances, with said material being photoactivated by means of LED-generated photons of a certain wavelength, maintaining the system at a given relative humidity so that the chemisorption and photocatalysis reactions may take place.

4. ^{a}.- Autonomous air quality controller device using a multifunctional chemisorbent-photocatalytic material, as claimed in claim 3, **characterised in that** the mixtures of semiconductors and oxidant contain between 20 % and 75 % semiconductors, and between 15 % and 60 % oxidant.

5. ^{a}.- Autonomous air quality controller device using a multifunctional chemisorbent-photocatalytic material, as claimed in claim 3, **characterised in that** the semiconductors which participate in the mixture are selected from TiO₂, SrTiO₃, WO₃, Bi₂O₃, ZnO, SNO₂, CdS, SiC, MoS₃, MgO, SiO₂, Fe₂O₃ and ZnS.

6. ^{a}.- Autonomous air quality controller device using a multifunctional chemisorbent-photocatalytic material, as claimed in claim 3, **characterised in that** the oxidant which participates in the mixture is KMnO₄ and/or NalO₄.

7. ^{a}.- Autonomous air quality controller device using a multifunctional chemisorbent-photocatalytic material, as claimed in claim 3, **characterised in that** the mixture obtained as a final product exhibits a relative humidity between 30 % and 40 %.

8. ^{a}.- Autonomous air quality controller device using a multifunctional chemisorbent-photocatalytic material, as claimed in the preceding claims, **characterised in that** photoactivation is performed by means of photons, primarily LEDs which emit in the ultraviolet range, with a wavelength between 200 and 400 nm.
